# EUROPEAN PATENT APPLICATION

(11) **EP 2 341 105 A1**
(43) Date of publication of application: **06.07.2011**
(21) Application number: 10196817.0
(22) Date of filing: 23.12.2010
(51) Int. Cl.: C08L 77/06

(54) **Polyamide Based Resin Composition Having Excellent Whiteness, Thermal Conductivity, and Extruding Moldability**

(30) Priority: 31.12.2009 KR 20090136120
(71) Applicant: Cheil Industries Inc., Gumi-si Gyeongsangbuk-do 730-030 (KR)
(72) Inventor: Namkung, Han, Uiwang-si, Gyeonggi-do (KR); Shin, Chan Gyun, Uiwang-si, Gyeonggi-do (KR); Ryu, Young Sik, Uiwang-si, Gyeonggi-do (KR); Youn, Bum Seok, Uiwang-si, Gyeonggi-do (KR); Kim, Jong Yeun, Uiwang-si, Gyeonggi-do (KR); Lim, Jong Cheol, Uiwang-si, Gyeonggi-do (KR)
(74) Representative: Bublak, Wolfgang

(57) **Abstract**

The present invention provides a polyamide resin composition having whiteness, thermal conductivity and extrusion molding property, which includes (A) polyamide resin; (B) heat conductive filler; (C) filler; and (D) thermoplastic resin which has miscibility with the polyamide and weight average molecular weight of 500,000 to 5,000,000.

The above polyamide resin composition includes about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and weight average molecular weight of 500,000 to 5,000,000.

## Description

The present invention relates to a polyamide resin composition and a method for preparing the polyamide resin composition having excellent whiteness, thermal conductivity and extruding moldability. More particularly, the present invention relates to a polyamide resin composition and a method for preparing the polyamide resin composition having excellent whiteness, thermal conductivity and extruding moldability as using both heat conductive filler and thermoplastic resin which has miscibility with the polyamide and weight average molecular weight of 500,000 to 5,000,000.

The history of nylon as an engineering plastic is close to 40 years, however the demand thereof is still great. since nylon basically has a lot of kinds such as nylon 6, nylon66, nylon610,nylon 612, nylon11, nylon12, and a combination thereof or blends thereof and the like, and each nylon has useful properties and various performance, the demand for nylons have been great continually.

Nylon based resin has highly improved mechanical property and heat resistance by adding inorganic reinforced material such as glass fiber and, therefore, the nylon has been applied in structure materials and interior or exterior materials of a car.

Recently, nylon resin is in the limelight as LED (light emitting diode) materials such as a reflector, a reflector cup, a scrambler and a housing for LED, since nylon has excellent energy efficiency and energy lifespan.

Reflector materials for LED in the market generally have heat resistance and high whiteness. Thermal conductivity of the general reflector material is around 0.1 ~0.2W/m-K which as low as a general high molecular resin. Accordingly, a metal thin film of high conductivity had been conventionally inserted in order to eliminate heat within a reflector of LED in the past. However, there is no material that seeks to radiate heat by increasing thermal conductivity of the reflector per se.

One object of the present invention is to provide a polyamide resin composition and a method for preparing the polyamide resin composition having excellent whiteness as well as thermal conductivity.

Another object of the present invention is to provide a polyamide resin composition and a method for preparing the polyamide resin composition having excellent extruding moldability.

Another object of the present invention is to provide a polyamide resin composition and a method for preparing the polyamide resin composition having excellent whiteness, thermal conductivity and extruding moldability so that it is capable of being used as a material of a part for LED which is an integrated part consisting of a reflector and a heat removal plate.

Above objects have been achieved by providing polyamide resin composition including (A) polyamide resin, (B) heat conductive filler, (C) filler and (D) thermoplastic resin which has miscibility with the polyamide and has weight average molecular weight of 500,000 to 5,000,000.

In an embodiment of the present invention, the thermoplastic resin which has miscibility with the polyamide and weight average molecular weight of 500,000 to 5,000,000(D)is one or more selected from a group consisting of acrylic resin, sulfide resin and polyolefin resin.

In another embodiment of the present invention, the polyamide resin composition includes about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and weight average molecular weight of 500,000 to 5,000,000.

In another embodiment of the present invention, the polyamide resin composition further includes (E) white pigment.

In another embodiment of the present invention, the (E) white pigment is about 5 to about 30 parts by weight, based on 100 parts by weight of the polyamide resin composition including about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and weight average molecular weight of 500,000 to 5,000,000.

In another embodiment of the present invention, initial whiteness index of the polyamide resin composition is more than 89.

In another embodiment of the present invention, thermal conductivity of the polyamide resin composition is more than 3.0 W/mK.

In another embodiment of the present invention, melt tensile strength of the polyamide resin composition is about 50 to 150 cN when tensile velocity is 100 mm/s.

The present invention also provides a method for producing a polyamide resin composition have melt tensile strength of 50 to 150 cN (100 mm/s of tensile velocity) as well as excellent thermal conductivity and whiteness, which is prepared by mixing (A) polyamide resin, (B) heat conductive filler, the (C) filler, and the (D) thermoplastic resin which has miscibility with the polyamide and weight average molecular weight of 500,000 to 5,000,000

In one exemplary embodiment of the invention of the method, the (D) thermoplastic resin which has miscibility with the polyamide and weight average molecular weight of 500,000 to 5,000,000 is one or more selected from a group consisting of acrylic resin, sulfide resin and polyolefin resin.

In another exemplary embodiment of the invention, the method for producing a polyamide resin composition is prepared by mixing about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and weight average molecular weight of 500,000 to 5,000,000.

In another exemplary embodiment of the invention, the method for producing a polyamide resin composition further includes (E) white pigment.

In another exemplary of the invention, the method for producing a polyamide resin composition is prepared by mixing the (E) white pigment is about 5 to about 30 parts by weight, based on 100 parts by weight of the polyamide resin composition including about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and weight average molecular weight of 500,000 to 5,000,000.

In an exemplary the present invention provides an article prepared from the polyamide resin composition.

In another embodiment of the present invention, the article is a heat removal plate being used in reflector for LED.

In another embodiment of the present invention, the article is an integrated part for LED with a reflector and a heat removal plate.

The present invention will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

### Polyamide resin composition

The present invention provides a polyamide resin composition including (A) polyamide resin, (B) heat conductive filler, (C) filler and (D) thermoplastic resin which has miscibility with the polyamide and weight average molecular weight of 500,000 to 5,000,000.

In an exemplary embodiment of the invention, the polyamide resin composition further includes (E) white pigment.

### (A) Polyamide resin

The polyamide resin of the present invention is prepared by polymerizing dicarboxylic acid and diamine.

In an exemplary embodiment of the dicarboxylic acid, it may be without limitation aromatic carboxylic acid such as terephthalic acid, isophthalic acid, 2-methylterepthalic acid, naphthalene dicarboxylic acid, phthalic anhydride, trimellitic acid, pyromellitic acid, trimellitic anhydride, pyromellitic anhydride, and the like as well as alkane carboxylic acid such asoxalic acid, malonic acid, succinic acid, glutaric acid, adipic acid, pimelic acidand the like.aromatic carboxylic acid such as terephthalic acid, isophthalic acid, 2-methylterepthalic acid, naphthalene dicarboxylic acid, phthalic anhydride, trimellitic acid, pyromellitic acid, trimellitic anhydride, pyromellitic anhydride, and the like.

In another exemplary embodiment of the invention, the above diaminemay be without limitation aromatic diamine as well as aliphatic amine and alicyclic diamine having 1 to 30 carbon atoms.

Specific examples of the aliphatic amine having 1 to 30 carbon atoms are without limitation2-methyl-1,5-diaminopentane, 2-methyl-1,6-diaminohexane, 2-methyl-1,7-diaminoheptane, 2-methyl-1,8-diaminooctane,2-methyl-1,9-diaminononane, 2-methyl-1,10-diaminodecane, 2-methyl-1,11-diaminoundecane, and the like.

Specific examples of the alicyclic diamine having 1 to 30 carbon atoms are without limitation 1,3-diaminocyclohexane, 1,4-diaminocyclohexane, 1,3-bis(aminomethyl)cyclohexane, 1,4-bis(aminomethyl)cyclohexane, isophoronediamine, piperazine, 2,5-dimethylpiperazine, bis(4-aminocyclohexyl)methane, bis(4-aminocyclohexyl)propane, 4,4'-diamino-3,3'-dimethyldicyclohexylpropane, 4,4'-diamino-3,3'-dimethyldicyclohexylmethane,4,4'-diamino-3,3'-dimethyl-5,5'-dimethyldicyclohexylmethane, 4,4'-diamino-3,3'-dimethyl-5,5'-dimethyldicyclohexylpropane,α,α'-bis(4-aminocyclohexyl)-p-diisopropylbenzene, α,α'-bis(4-aminocyclohexyl)-m-diisopropylbenzene,α,α'-bis(4-aminocyclohexyl)-1,4-cyclohexane, a,a'-bis(4-aminocyclohexyl)-1,3-cyclohexane, and the like.

Also, specific examples of the aromatic diamine having 1 to 30 carbon atoms are without limitation p- or m-xylene diamine and the like.

In an exemplary embodiment, a modified nylon based thermoplastic resin has a main chain with a benzene ring, which may be prepared by condensation polymerizing dicarboxylic acid monomer including about 10 to about 100% by weight of aromatic dicarboxylic acid with aliphatic or alicyclic diamine.

The polyamide resin may be a modified nylon based thermoplastic resin. Further, the aromatic dicarboxylic acid may preferably be a terephthalic acid (TPA) represented by Fomula 1a below or an isophthalic acid (IPA) represented by Fomula 1b below.

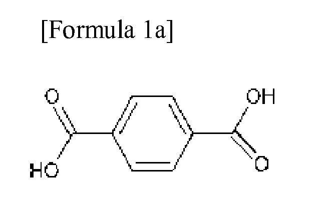

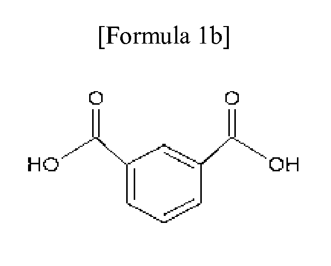

The aliphatic or alicyclic diamine above may be represented by NRR'(wherein R and R' is independently H, substituted or non-substituted alkyl group having 4 to 20 carbon atoms).

The preferred example of the aliphatic or alicyclic diamine above is prepared by condensation polymerizing hexamethylenediamine and theterephthalic acid, simply being called 6T, represented by Fomula 2 below.

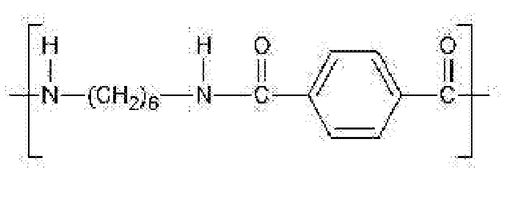

In one embodiment of the present invention, the modified nylon based thermoplastic resin can be prepared by further mixing aliphatic polyamide such as nylon 6, nylon 66 and the like. The specific examples of the modified nylon above based on thermoplastic resin are without limitation nylon 6T, nylon 9T, nylon 10T, nylon 11T, nylon 12T, nylon 6T/66, nylon 10T/1012, nylon 6I/66, nylon 6T/6I/66, and a combination thereof.

### (B) Heat conductive filler

A heat conductive filler of the present invention is one or more selected from a group consisting of boron nitride, aluminum oxide, boron nitride, boron carbide, calcium fluoride and aluminum nitride and the like, which is used to enhance conductivity of polyamide resin composition.

A reflector for LED is used under condition of about 180°C formed by heat produced in the process of converging electric energy into light and, accordingly, the produced heat needs to be continuously radiated to the outside. Thus, a metal thin film of high conductivity had been conventionally inserted in order to eliminate heat within a reflector of LED in the past. However, heat conductive filler is added to the present invention, since it can remove heat efficiently without an additional metal plate, if the thermal conductivity of the reflector is increased.

It is preferred that the heat conductive filler is made of boron nitride having high whiteness property. Therefore, if the boron nitride is used, high whiteness and thermal conductivity can be obtained simultaneously without using a white pigment

### (C) Filler

The present invention includes various fillers in the forms of fiber, powder, particle, flake, needle, cloth, mat, and the like in order to improve mechanical property, heat resistance and dimensional stability of the resin composition.

In the present invention, general organic or inorganic filler can be used. For example, the filler is without limitation carbon fibers, glass fibers, boron fibers, glass bids, glass fibers, carbon black, diatom earth, clay, kaolin, talc, mica, calcium carbonate, filler of needle form and a combination thereof, and examples of the filler of needle form are without limitation wollastonite, potassium titanate whiskers, aluminum boric acid whiskers, zinc oxide whiskers, calcium whiskers and the like. In aspect of high impact strength and lower cost, the glass fiber is preferred. And in aspect of obtaining an article having excellent surface smoothness, filler of needle form is preferred. Especially, in aspect of high whiteness, glass fiber, wollastonite, potassium titanate whiskers and aluminum boric acid whisker are preferred.

### (D) Thermoplastic resin which has miscibility with the polyamide and has weight average molecular weight of 500,000 to 5,000,000

The polyamide resin composition of the present invention includes thermoplastic resin which has miscibility with the polyamide and weight average molecular weight of 500,000 to 5,000,000 as an essential component to have an excellent extrusion molding property.

A polyamide has excellent physical impact strength, however, it can be easily broken when force is applied and may not agglomerate well while extruding. Thus, the inventors have discovered that when thermoplastic resin has weight average molecular weight of 500,000 to 5,000,000 is mixed, melt tensile strength of the polyamide resin composition increases and, thereby, extrusion molding property such as agglomeration can be improved.

Also, the thermoplastic resin for improving the extrusion molding property must have excellent compatibility with polyamide resin as well as the above condition of weight average molecular weight. Examples of above thermoplastic resin are acrylic resin, sulfide resin, polyolefin resin and the like.

Further, the thermoplastic resin having miscibility with the polyamide and having weight average molecular weight of 500,000 to 5,000,000 have to be stable under condition of processing temperature, about 260°C to about 330°C. To be specific, the acrylic resin or the sulfide resin being stable at high temperature can be used with no limitation, however, the polyolefin resin may degrade at a high temperature and, accordingly, a polyolefin resin with partial chains that are substituted with fluoroplastic should be used.

Also, a modified acrylic polymer including an aromatic or alicyclic acrylic compound and a compound that is copolymerizable with an aromatic or alicyclic acrylic compound may be used as the acrylic resin above.

### (E) White pigment

In the present invention, whiteness of the polyamide resin composition can be achieved by including the heat conductive filler above, however, more preferably it can further include a (C) white pigment. For example, the (C) white pigment is without limitation titanium dioxide, zinc oxide, Zinc Sulfide, white lead, zinc sulfate, barium sulfate, calcium carbonate, aluminum oxide and a combination thereof. Also, these white pigments can be treated by silane coupling agent or titanium coupling agent. For example, they can be treated by silane compound such as vinyltriethoxysilane, 2-aminopropyltriethoxysilane, 2-glycitoxypropyltriethoxysilane and the like. Especially, titanium dioxide is preferred as a white pigment because reflectivity and block out property can be improved by using titanium dioxide. Further, the titanium dioxide is preferably a routine type. A particle size of titanium dioxide is about 0.05 to about 2.0µm, for example, about 0.05 to about 0.7µm.

The white pigment of the present invention may be about 5 to about 30 % by weight on basis of the total composition.

In one embodiment, the polyamide resin composition of the present invention may include about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and weight average molecular weight of 500,000 to 5,000,000.

In another embodiment, the polyamide resin composition of the present invention may include about 5 to about 30 parts by weight of the (E) white pigment, based on 100 parts by weight of the polyamide resin composition including about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and weight average molecular weight of 500,000 to 5,000,000.

In another embodiment of the present invention, initial whiteness index of the polyamide resin composition is more than 89.

In another embodiment of the present invention, thermal conductivity of the polyamide resin composition is more than 3.0 W/mK.

In another embodiment of the present invention, melt tensile strength of the polyamide resin composition is about 50 to 150 cN on 100 mm/s of tensile velocity.

### An article prepared from polyamide resin composition

The present invention provides an article prepared from the polyamide resin composition above. The article preferably is a heat removal plate for LED.

Furthermore, polyamide resin composition of the present invention can be a material of an integrated part for LED consisting of a reflector and a heat removal plate, since it has excellent whiteness, thermal conductivity and extrusion molding property together.

The invention may be better understood by reference to the following examples which are intended for the purpose of illustration and are not to be construed as in any way limiting the scope of the present invention, which is defined in the claims appended hereto.

### EXAMPLES

### Example

The compounds used in Examples and Comparative Examples are as follows.
(A) Polyamide resin
   A polyamide resin including100 parts by weight of dicarboxylic acid consisting of 60% by weight of terephthalic acid and 40% by weight of adipic acid and 100 parts by weight of 1,6-diaminohexane is used.
(B) Boron nitride is used in order to have thermal conductivity and whiteness.
(C) Glass fiber is used as a filler.
(D) Polymethylmethacrylate having weight average molecular weight of 1,250,000 is used as thermoplastic resin which has miscibility with the polyamide and weight average molecular weight of 500,000 to 5,000,000.
(E) Titanium dioxide is used as a white pigment.

Each polyamide thermoplastic resin(Examples 1-6, Comparative Examples 1-6) are prepared by mixing each compound according to mixing ratio of Table 1 below, and thermal conductivity is measured according to ASTM E 1530, and whiteness is also measured according to ASTM E 313.Further, melt tensile strength is measured by using melt tension meter. The result data is represented in the following Table 1.

**[Table 1 ]**

| | Polyamide | Boron nitride | Titanium Dioxide | Glass fiber | Polymethyl Methacrylate (PMMA) | Whiteness | Thermal conductivity (W/mK) | Melt tensile strength (cN) |
|---|---|---|---|---|---|---|---|---|
| Example 1 | 70 | 10 | 10 | 10 | 20 | 90 | 3.0 | 140 |
| Example 2 | 60 | 10 | 10 | 20 | 20 | 91 | 3.5 | 120 |
| Example 3 | 40 | 20 | 20 | 20 | 20 | 92 | 5.0 | 90 |
| Example 4 | 40 | 40 | | 20 | 10 | 91 | 10.0 | 65 |
| Example 5 | 30 | 50 | | 20 | 10 | 90 | 12.0 | 55 |
| Example 6 | 30 | 30 | 20 | 20 | 10 | 92 | 7.0 | 50 |
| Comparative Example 1 | 90 | | | 10 | 20 | 86 | 0.2 | 175 |
| Comparative Example 2 | 70 | | | 30 | 20 | 87 | 0.3 | 140 |
| Comparative Example 3 | 30 | 60 | | 10 | 10 | 87 | 15.0 | 45 |
| Comparative Example 4 | 30 | | 50 | 20 | 10 | 96 | 2.5 | 45 |
| Comparative Example 5 | 40 | | 40 | 20 | 10 | 94 | 2.0 | 65 |
| Comparative Example 6 | 70 | 10 | 10 | 10 | | 88 | 3.0 | 35 |

As represented in Table 1, the Examples 1 to 6 of the invention show that efficient thermal conductivity, melt tensile strength and whiteness are achieved simultaneously in comparison to Comparative Examples.

Also, Comparative Examples 1 and 2 show that the compositions without titanium dioxide and boron nitride do not have both good thermal conductivity and whiteness. As for Comparative Examples 4 and 5, the compositions including only titanium dioxide without boron nitride do not have good thermal conductivity. Further, Comparative Example 3 shows that the compositions including great amount of boron nitride have a decreased whiteness. Comparative Example 6 show that when a basic resin including only polyamide is used, melt tensile strength decreases and, thereby, extrusion molding property deteriorates.

Many modifications and other embodiments of the invention will come to mind to one skilled in the art to which this invention pertains having the benefit of the teachings presented in the foregoing descriptions. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

This application claims priority from Korea Patent Application No. 2009-0136120, filed on December 31, 2009, the disclosure of which is incorporated herein by reference in its entirety.

## Claims

1. A polyamide resin composition comprising:
(A) polyamide resin;
(B) heat conductive filler;
(C) filler; and
(D) thermoplastic resin which has miscibility with the polyamide and has weight average molecular weight of 500,000 to 5,000,000.

2. The polyamide resin composition of claim 1, wherein the (B) heat conductive filler is one or more selected from a group consisting of boron nitride, aluminum oxide, boron nitride, boron carbide, calcium fluoride and aluminum nitride.

3. The polyamide resin composition of claim 1 or 2, wherein the (D) thermoplastic resin which has miscibility with the polyamide and has weight average molecular weight of 500,000 to 5,000,000is one or more selected from a group consisting of acrylic resin, sulfide resin and polyolefin resin.

4. The polyamide resin composition of any of claims 1 to 3, wherein the polyamide resin composition includes about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and weight average molecular weight of 500,000 to 5,000,000.

5. The polyamide resin composition of any of claims 1 to 4, wherein the polyamide resin composition further includes (E) white pigment.

6. The polyamide resin composition of claim 5, wherein the (E) white pigment is about 5 to about 30 parts by weight, based on 100 parts by weight of the polyamide resin composition comprising about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and has weight average molecular weight of 500,000 to 5,000,000.

7. The polyamide resin composition of any of claims 1 to 6, wherein initial whiteness index of the polyamide resin composition is more than 89.

8. The polyamide resin composition of any of claims 1 to 7, wherein thermal conductivity of the polyamide resin composition is more than 3.0 W/mK.

9. The polyamide resin composition of any of claims 1 to 8, wherein melt tensile strength of the polyamide resin composition is about 50 to 150 cN on 100 mm/s of tensile velocity.

10. A method for producing a polyamide resin composition prepared by mixing about 10 to about 80 % by weight of the (A) polyamide resin, about 5 to about 55 % by weight of the (B) heat conductive filler, about 5 to about 30 % by weight of the (C) filler, and about 5 to about 80 % by weight of the (D) thermoplastic resin which has miscibility with the polyamide and weight average molecular weight of 500,000 to 5,000,000.

11. An article obtainable from the polyamide resin composition of any one of claims 1 to 9.

12. The article of claim 11, wherein the article is a heat removal plate for LED.

13. The article of claim 11, wherein the article is an integrated part for LED consisting of a reflector and a heat removal plate.
